# EUROPÄISCHE PATENTSCHRIFT

(11) **EP 1 391 133 B1**
(45) Veröffentlichungstag und Bekanntmachung des Hinweises auf die Patenterteilung: **04.07.2018**
(21) Anmeldenummer: 02729895.9
(22) Anmeldetag: 21.05.2002
(51) Int. Cl.: H04W 72/04, H04W 28/06

(54) **VERFAHREN ZUR ZUWEISUNG VON KANÄLEN IN EINEM FUNK-KOMMUNIKATIONSSYSTEM, BASISSTATIONSSYSTEM, TEILNEHMERSTATION UND FUNK-KOMMUNIKATIONSSYSTEM**
METHOD FOR ALLOCATING CHANNELS IN A RADIO COMMUNICATIONS SYSTEM, BASE STATION, MOBILE STATION AND RADIO COMMUNICATION SYSTEM
PROCEDE D'AFFECTATION DE CANAUX DANS UN SYSTEME DE RADIOCOMMUNICATION, STATION DE BASE, STATION D'ABONNE RADIO ET SYSTEME DE COMMUNICATION RADIO

(30) Priorität: 21.05.2001 DE 10124765
(43) Veröffentlichungstag der Anmeldung: 25.02.2004
(73) Patentinhaber: Nokia Technologies Oy, 02610 Espoo (FI)
(72) Erfinder: MEILING, Axel, 13597 Berlin (DE); PURAT, Marcus, 12209 Berlin (DE)
(74) Vertreter: Borgström, Markus
(86) Internationale Anmeldenummer: PCT/DE2002/001820
(87) Internationale Veröffentlichungsnummer: WO 2002/096143

(56) Entgegenhaltungen:
- EP-A- 1 006 740
- DE-A- 19 856 834
- "3rd Generation Partnership Project;Technical Specification Group Radio Access Network; Radio Interface Protocol Architecture (3G TS 25.301 version 3.3.0)" 3RD GENERATION PARTNERSHIP PROJECT;TECHNICAL SPECIFICATION GROUP RADIO ACCESS NETWORK; RADIO INTERFACE PROTOCOL ARCHITECTURE (3G TS 25.301 VERSION 3.3.0), XX, XX, Dezember 1999 (1999-12), XP002164238
- "Digital cellular telecommunications system (Phase 2+); General Packet Radio Service (GPRS); Overall description of the GPRS radio interface; Stage 2 (GSM 03.64 version 8.5.0 Release 1999)", 3GPP STANDARD; TS 101 350, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V8.5.0, 1 July 2000 (2000-07-01), pages 1-60, XP050358065,

## Beschreibung

Die Erfindung betrifft ein Verfahren zur Zuweisung von Kanälen in einem Funk-Kommunikationssystem, insbesondere in als UMTS (universal mobile telecommunication system) bezeichneten Mobilfunksystemen mit breitbandiger Funkschnittstelle. Weiterhin betrifft die Erfindung ein Basisstationssystem, eine Teilnehmerstation sowie ein Funk-Kommunikationssystem zur Durchführung des erfindungsgemäßen Verfahrens.

In Funk-Kommunikationssystemen werden Daten mit Hilfe von elektromagnetischen Wellen über eine Funkschnittstelle übertragen. Die Funkschnittstelle bezieht sich auf eine Verbindung zwischen einer Basisstation und Teilnehmerstationen, wobei die Teilnehmerstationen Mobilstationen oder ortsfeste Funkstationen sein können. Das Abstrahlen der elektromagnetischen Wellen erfolgt dabei mit Trägerfrequenzen, die in dem für das jeweilige System vorgesehenen Frequenzband liegen. Für zukünftige Funk-Kommunikationssysteme, beispielsweise das UMTS-Mobilfunksystem oder andere Systeme der 3. Generation sind Frequenzen im Frequenzband von ca. 2000 MHz vorgesehen, wobei die Bandbreite eines Kanals 5 MHz beträgt.

Für das UMTS-Mobilfunksystem ist im Gegensatz zu Systemen wie GSM (global system for mobile communications) eine Mehrzahl von auch parallel zu übertragenden Diensten vorgesehen. In den Patentschriften EP 98 122 719 und DE 198 55 194 sind Möglichkeiten beschrieben, die Transportformate der Kombination von Daten mehrerer Dienste zu signalisieren. Die Daten mehrerer Dienste einer Verbindung werden dabei über einen gemeinsam genutzten physikalischen Kanal übertragen.

Die Nutzung von gemeinsam genutzten physikalischen Kanälen für die Übertragung von Daten mehrerer Dienste einer Verbindung zu einer Teilnehmerstation setzt voraus, daß eine eindeutige Abbildungsvorschrift die Zuordnung der Dienste zu unterschiedlichen Segmenten des physikalischen Kanals angibt. Ein physikalischer Kanal wird beispielsweise durch ein Frequenzband und einen Spreizkode (CDMA code division multiple access) innerhalb eines Rahmens definiert.

Zur Beschreibung der Abbildungsvorschrift sind folgende Begriffe üblich:

### Transport Format (TF):

Ein Transportformat definiert eine Datenrate, eine Kodierung, eine Verwürfelung (engl. Interleaving), eine Datenratenanpassung durch Punktierung und eine Fehlerschutzvorschrift eines Transportkanals für einen Dienst.

### Transport Format Set (TFS):

Hiermit wird ein Satz möglicher Transportformate bezeichnet, die für einen speziellen Dienst erlaubt sind.

### Transport Format Combination (TFC):

Dieser Begriff gibt eine mögliche Kombination von Transportformaten der verschiedenen Dienste an, die auf einen gemeinsamen physikalischen Kanal abgebildet werden.

### Transport Format Combination Set (TFCS):

Hiermit wird ein Satz möglicher TFC als Teilmenge aller TFC bezeichnet, die für eine spezielle Verbindung erlaubt sind.

### Transport Format Combination Identifier (TFCI):

Diese Information gibt die aktuell verwendete Kombination von Transportformaten innerhalb des TFCS an.

Für eine bedarfsgerechte Wahl der aktuell verwendeten Kombination von Transportformaten der verschiedenen Dienste ist eine Änderbarkeit des TFC und damit eine regelmäßige Signalisierung des TFCI notwendig. Diese Signalisierung bindet jedoch nachteilig Übertragungskapazität. Je größer die Anzahl möglicher Kombinationsmöglichkeiten (TFCS), umso mehr Kapazität wird zur Signalisierung benötigt.

Bei dem für den FDD-Modus (FDD frequency division duplex) des UMTS-Mobilfunksystems gewählten Breitband-CDMA System tritt beim Senden von der Basisstation zur Teilnehmerstation in Abwärtsrichtung (Downlink) das Problem auf, daß die Anzahl der gleichzeitig nutzbaren orthogonalen Spreizcodes limitiert und hierdurch die Unterstützung variabler Datenraten erschwert ist. So ist es bei höheren Vekehrsdichten im System nicht möglich, allen Teilnehmerstationen soviele dezidierte, d.h. ausschließlich von der Teilnehmerstation genutzte (engl. dedicated), Kanäle (DCH - Dedicated Channel) zuzuordnen, wie diese bei Übertragung mit ihrer jeweils höchsten Datenrate benötigten.

Aud diesem Grund werden in Abwärtsrichtung gemeinsame Kanäle, sogenannte "Shared Channel" (DSCH downlink shared channel), definiert, siehe dazu ETSI SMG2 UMTS-L1, Tdoc SMG2 UMTS-L1 559/98, vom 9. November 1998. Die gemeinsamen Kanäle werden innerhalb des breitbandigen Frequenzbandes durch Spreizcodes gebildet, die temporär verschiedenen Verbindungen bzw. Teilnehmerstationen für jeweils die Dauer eines oder mehrerer Rahmen zugeordnet werden. Hierbei entsteht jedoch das Problem, wie einer Teilnehmerstation mit minimalem Aufwand signalisiert werden kann, ob und wenn ja, in welchen dieser gemeinsamen Kanäle, Informationen für die Teilnehmerstation übertragen werden.

Aus ETSI SMG2 UMTS-L1, Tdoc SMG2 UMTS-L1 559/98, vom 9. November 1998, ist dazu bekannt, daß die Signalisierung der Datenraten für die im Zeitmultiplex übertragenen Dienste mittels des TFCI-Parameters geschieht, der während jedes Rahmens als Teil der Kontrollinformation, d.h. In-Band, übermittelt wird. Um die schnelle Allokierung von gemeinsamen Kanälen zu gewährleisten, wird eine explizite Signalisierung vorgeschlagen, die eine bestimmte Anzahl dieser TFCI-Bits ausschließlich dafür verwendet, einen bestimmten Spreizcode anzuzeigen (siehe vorletzte Seite dieses Dokuments).

Diese Lösung besitzt den Nachteil, daß hierdurch bei gegebener Anzahl von TFCI-Bits die Anzahl der Kombinationsmöglichkeiten der Transportformate der Dienste deutlich eingeschränkt wird, was die Flexibilität bei der Übertragung variabler Datenraten erheblich beeinträchtigt.

Aus der DE 198 56 834 A1 ist hierzu bekannt, daß die Signalisierung von verwendeten gemeinsamen Kanälen impliziert über die Datenrate erfolgt, und daß nur bei bestimmten Datenraten der einzelnen Dienste mehrere Kombinationen von Kanälen alternativ zugelassen werden.

Bei dezidierten Verbindungen wird zu Beginn der Verbindung festgelegt, welche Resourcen zur Verfügung stehen. Da die Datenrate nicht über den gesamten Zeitraum der Verbindung in der Regel konstant ist, wird bei den bekannten Verfahren die aktuelle Datenrate für jede Allokationsperiode getrennt signalisiert. Beim Mobilfunsksystem UMTS entspricht die Allokationsperiode beispielsweise dem sogenannten TTI (Tranmission Time Interval). Von dieser Datenrate leitet der Teilnehmer dann die aktuell belegten Resourcen ab.

Beispiel: Die Datenrate der Verbindung wird auf 100kB maximal festgelegt und dem Teilnehmer werden dafür die Resourcen 0-19 zugewiesen. Wenn die Datenrate nun kurzzeitig auf 50kB absinkt, werden nur noch die Resourcen 0-9 genutzt. Die restlichen Resourcen bleiben für diesen Zeitraum ungenutzt.

Bei gemeinsam genutzten Resourcen muss für jede Übertragung festgelegt werden, welcher Teilnehmer welche Resourcen nutzten darf. Hierfür gibt es mehrere Möglichkeiten:
1. Es kann nur jeweils ein Teilnehmer die gesamten Resourcen nutzen. Die Teilnehmer würden somit ausschließlich gemäß einem Zeitmultiplexverfahren auf die Resourcen zugreifen können. Falls ein Teilnehmer nur eine kleine Datenmenge bekommt, wären die restlichen Resourcen ungenutzt.
2. Es wird jedem Teilnehmer explizit mitgeteilt, welche Resourcen er nutzten darf. Beispiel: Teilnehmer (TN) 1 nutzt Resource 0-3, TN 2 Resource 4 und 8, TN 3 Resource 5 und 12-36. Diese Methode bietet eine hohe Flexibilität, hat aber den Nachteil das sehr viele Bits signalisiert werden müssen.
3. Desweiteren gibt es verschiedene Abstufungen zwischen Verfahren der Möglichkeiten 1 und 2.

"Digital Cellular telecommunications system (Phase 2+); General Packet Radio Service (GPRS); Overall description of the GPRS radio interface; Stage 2 (GSM 03.64 version 8.5.0 Release 1999)", 3GPP STANDARD; TS 101 350, 3RD GENERATION PARTNERSHOP PROJECT (3GPP), MOBILE COMPETENCE CENTRE; 650, ROUTE DES LUCIOLES; F-06921 SOPHIA-ANTIPOLIS CEDEX; FRANCE, Nr. V8.5.0, 1. Juli 2000 (2000-07-01), Seiten 1-60, XP050358065, beschreibt ein GPRS radio interface.

Bei allen beschriebenen Methoden werden die Resource-Informationen somit explizit an die Teilnehmer weitergegeben. Zusätzlich wird jedem Teilnehmer noch parallel die aktuelle Datenrate übermittelt. Dieses führt nachteilig zu einer hohen Signalisierungslast.

Der Erfindung liegt die Aufgabe zugrunde, ein Verfahren anzugeben, das bei einer Nutzung von gemeinsamen Kanälen für mehrere Verbindungen die Effizienz der Resourcenzuweisung erhöht. Diese Aufgabe wird durch das Verfahren, das Basisstationssystem, die Teilnehmerstation sowie das Funk-Kommunikationssystem nach den Merkmalen des unabhängigen Patentansprüche
gelöst. Vorteilhafte Weiterbildungen sind den abhängigen Patentansprüchen zu entnehmen.

Der Erfindung liegt die Idee zugrunde, die Signalisierung der verwendeten Kanäle in einem gemeinsamen Kanal dahingehend zu gestalten, daß der Teilnehmerstation lediglich die Anzahl Kanäle bzw. die Datenrate sowie der Startpunkt und/oder die Richtung signalisiert wird. Dieses kann beispielsweise mittels eines Bits in der beschriebenen TFCI-Signalisierungsnachricht erfolgen, wobei die binären Zustände anzeigen, ob die Teilnehmerstation in der Reihenfolge der Kanäle aufsteigend oder absteigend Kanäle auswählen soll. Die Datenrate wird In-Band signalisiert, wobei diese Information über die Datenrate nicht in jedem Rahmen vollständig enthalten sein muß. Informationen aus dem Verbindungskontext bzw. aus vorangegangenen Rahmen können ebenso zur Bestimmung der Datenrate herangezogen werden.

Die Beziehung zwischen zugewiesener Datenrate und zu benutzenden Kanälen in dem gemeinsamen Kanal wird in einem getrennten Signalisierungskanal vereinbart, so daß vom jeweiligen Wert des TFCI-Parameters die gewählte Kombination an Kanälen einschließlich eines oder mehrerer gemeinsamer Kanäle für den Empfänger ableitbar ist. Diese Signalisierung der Beziehung (bzw. Abbildungsvorschrift der TFCI-Werte auf festgelegte Kombinationen der Transportformate) erfolgt vorteilhafterweise beim Verbindungsaufbau zwischen Basisstation und Teilnehmerstation.

Ausführungsbeispiele der Erfindung werden anhand der beiliegenden Zeichnungen näher erläutert.

Dabei zeigen
- Fig 1: eine schematische Darstellung eines Funk-Kommunikationssystems,
- Fig 2, 3: Abbildungen von Daten verschiedener Dienste auf gemeinsam genutzte physikalische Kanäle,
- Fig 4: ein Schichtenmodell der Übertragungsprotokolle,
- Fig 5: eine rahmenweise Datenübertragung mit einer erfindungsgemäßen Kanalzuweisung.

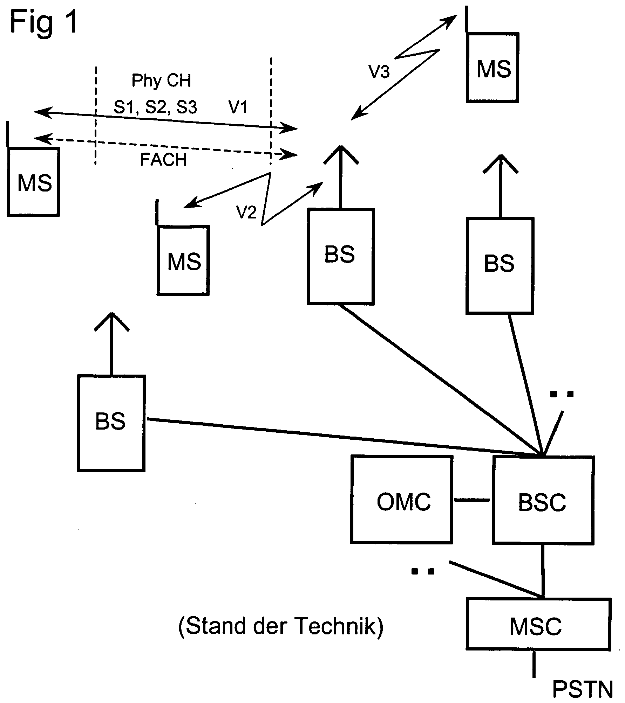

Das in Fig 1 dargestellte Mobilfunksystem als Beispiel eines Funk-Kommunikationssystems besteht aus einer Vielzahl von Mobilvermittlungsstellen MSC (Mobile Switching Center), die untereinander vernetzt sind bzw. den Zugang zu einem Festnetz PSTN (Public Switched Telephone Network) herstellen. Weiterhin sind diese Mobilvermittlungsstellen MSC mit jeweils zumindest einer Einrichtung RNM (Radio Network Management) zur Steuerung der Übertragungsresourcen verbunden. Jede dieser Einrichtungen RNM ermöglicht wiederum eine Verbindung zu zumindest einer Basisstation BS (Base Station).

Eine Basisstation BS kann über eine Funkschnittstelle eine Verbindung zu Teilnehmerstationen, z.B. Mobilstationen MS (Mobile Station) oder anderweitigen mobilen und stationären Endgeräten aufbauen. Durch jede Basisstation BS wird zumindest eine Funkzelle gebildet. In Fig 1 sind Verbindungen zur Übertragung von Nutzinformationen zwischen einer Basisstation BS und Mobilstationen MS dargestellt. Innerhalb von einer Verbindung V1 werden Daten von beispielsweise drei Diensten S (S1, S2, S3) innerhalb eines oder mehrerer physikalischer Kanäle Phy CH und Signalisierungsinformationen, z.B. die zugeteilten funktechnischen Resourcen für eine Verbindung V1, über einen verbindungsbegleitenden Kontrollkanal FACH (Forward link Access CHannel) übertragen.

Ein Operations- und Wartungszentrum OMC (Operation and Maintenance Center) realisiert Kontroll- und Wartungsfunktionen für das Mobilfunksystem bzw. für Teile davon. Die Funktionalität dieser Struktur ist auf andere Funk-Kommunikationssysteme übertragbar, in denen die Erfindung zum Einsatz kommen kann, insbesondere für Teilnehmerzugangsnetze mit drahtlosem Teilnehmeranschluß.

Im Funk-Kommunikationssystem nach Fig 1 sind sowohl in den Basisstationen BS als auch den Mobilstationen MS Übertragungsmittel und Signalisierungsmittel vorgesehen, die miteinander kommunizieren. Die Übertragungsmittel dienen der Übertragung von Daten einer Kombination mehrerer Dienste S über die aktuell verfügbaren physikalischen Kanäle Phy CH. Die physikalischen Kanäle Phy CH können als dedizierte Kanäle DCH, d.h. von einer Verbindung exklusiv genutzt, oder als gemeinsame Kanäle DSCH, d.h. abwechselnd oder parallel von unterschiedlichen Verbindungen V1, V2 genutzt, ausgebildet sein. Es ist also zu unterscheiden zwischen von mehreren Diensten S1, S2, S3 einer Verbindung V1 gemeinsam genutzten physikalischen Kanälen Phy CH und gemeinsamen Kanälen DSCH, die mehreren Verbindungen V1, V2 zugeteilt sind. Die Änderung der Zuteilung eines gemeinsamen Kanals DSCH ist ohne zusätzlichen Signalisierungsaufwand sehr schnell von Rahmen zu Rahmen möglich.

Die Signalisierungsmittel bestimmen TFCI-Werte zu den ausgewählten Kombinationen von Transportformaten TF für die Dienste S1, S2, S3 und führen eine In-band-Signalisierung der Transportformate TF durch. In dem getrennten Kanal FACH wird die Abbildungsvorschrift von TFCI-Wert zu Kombination von Transportformaten TF und benutzten Kanälen DCH, DSCH signalisiert.

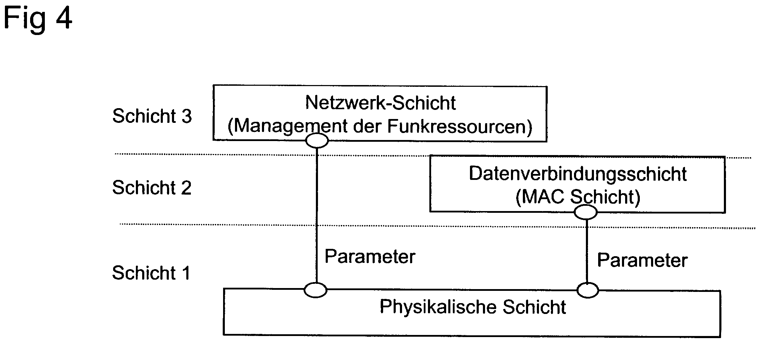

Das Schichtenmodell nach Fig 4 zeigt eine Einteilung der Protokolle des Funk-Kommunikationssystems in drei Schichten.
Schicht 1: physikalische Schicht zur Beschreibung aller Funktionen zur Bitübertragung über ein physikalisches Medium (z.B. Kodierung, Modulation, Sendeleistungskontrolle, Synchronisation etc.),
Schicht 2: Schicht der Datenverbindung zur Beschreibung der Abbildung von Daten auf die physikalische Schicht und deren Kontrolle,
Schicht 3: Netzwerk-Schicht zur Steuerung der Resourcen der Funkschnittstelle.

In der Schicht 3 wird für eine Verbindung das TFCS festgelegt, währenddessen in der Schicht 2 die Auswahl einer Kombination (eines TFC) erfolgt, die wie später gezeigt mittels eines TFCI In-Band signalisiert wird.

Der Parameteraustausch zwischen den Schichten 1 und 2 unterstützt die Funktionen eines Transfers von Rahmen mit Daten der Schicht 2 über die Funkschnittstelle und der Anzeige des Status der Schicht 1 an höhere Schichten. Der Parameteraustausch zwischen den Schichten 1 und 3 unterstützt die Kontrolle der Konfiguration der Übertragung in der Schicht 1 und generiert Systeminformation über die Schicht 1.

Die Abbildung der Daten verschiedener Verbindungen S auf einen gemeinsamen physikalischen Kanal Phy CH und die Signalisierung der Zuteilung eines gemeinsamen Kanals DSCH entspricht dabei der Interaktion der Schichten 1 und 2.

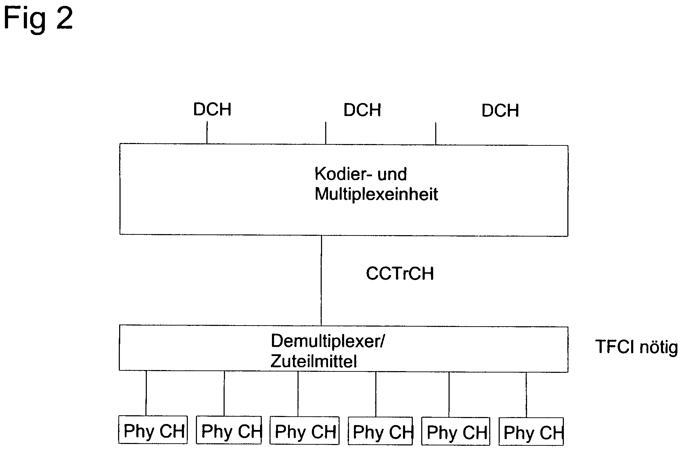

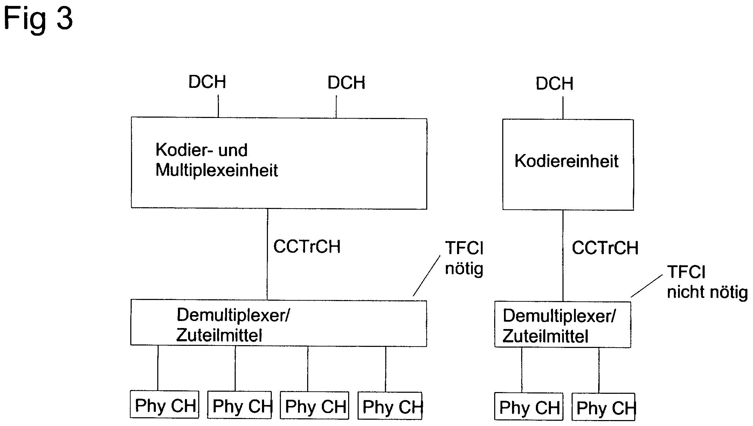

Entsprechend der Figuren 2 und 3 ergibt sich die Notwendigkeit einer Signalisierung von Transportformaten TF für aktuell übertragene Dienste.

In Fig 2 ist als funktionelle Darstellung eine Kodier- und Multiplexeinheit gezeigt, die Daten mehrerer Datenkanäle DCH, diese entsprechen jeweils den Daten eines Dienstes S1, S2, S3, auf einen kodierten gemeinsamen Transportkanal CCTrCH abbildet. Eine Abbildung ist dabei eine Vorschrift, nach welchem Bitmuster die Daten in eine serielle Datensequenz eingetragen werden. Ein Demultiplexer/Zuteilmittel verteilt die Daten des kodierten gemeinsamen Transportkanals CCTrCH auf mehrere physikalische Kanäle Phy CH. Über die physikalischen Kanäle Phy CH werden somit jeweils ständig Daten mehrerer Dienste S1, S2, S3 übertragen. Kein physikalischer Kanal Phy CH ist einem Dienst S1 oder S2 oder S3 allein, sondern dem kodierten gemeinsamen Transportkanal CCTrCH mit allen seinen Diensten S1, S2, S3 zugeordnet.

Da die Empfangsseite diese Abbildung nachvollziehen und die Daten aus den physikalischen Kanälen Phy CH auslesen und wieder in getrennten Transportkanälen DCH der Dienste darstellen muß, ist eine Signalisierung erforderlich. Diese Signalisierung in Form von TFCI-Werten gibt die aktuell genutzte Kombination der Transportformate TF der Dienste wieder und, wie später gezeigt wird, auch die aktuelle Zuteilung eines gemeinsamen Kanals oder mehrerer gemeinsamer Kanäle DSCH. Welche Kombinationen für die Verbindung zugelassen sind (TFCS), wurde zum Verbindungsaufbau vereinbart.

Zwei Möglichkeiten in der Beziehung zwischen Datenrate und Dienstkombination sind realisierbar (siehe auch EP 98 122 719) :
1. Jede Datenrate entspricht genau einer Kombination von Transportformaten TF.
2. Pro Datenrate sind mehrere Kombination von Transportformaten TF möglich, die anhand von TFCI-Werten unterscheidbar sind.

Fig 3 zeigt die Abbildung in leicht abgewandelter Form, wobei deutlich gemacht wird, daß nur bei einer gemeinsamen Nutzung von physikalischen Kanälen Phy CH durch mehrere Dienste S1, S2, S3 die Signalisierung der Teilinformation TFCI nötig ist. Nutzt ein Dienst S1 oder S2 oder S3 einen physikalischen Kanal Phy CH ausschließlich, so kann auf die Signalisierung der Teilinformation TFCI verzichtet werden.

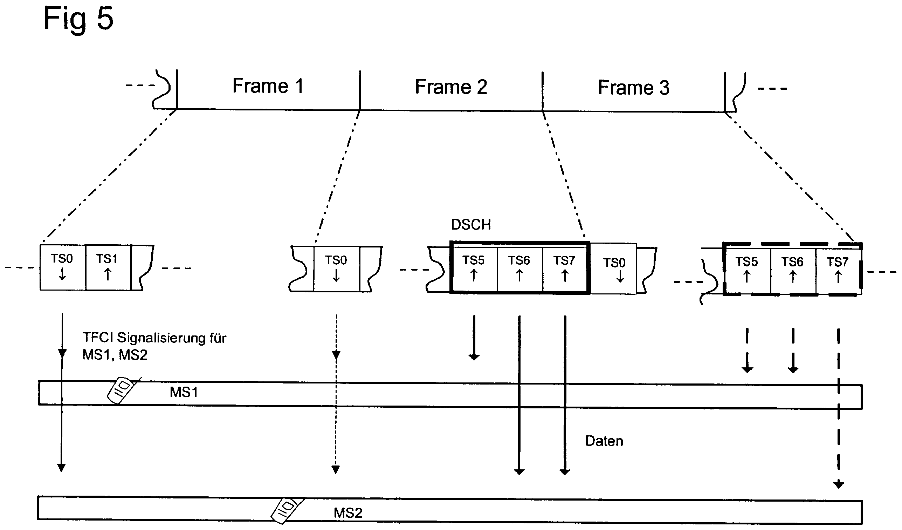

Das in der Fig 5 gezeigte erfindungsgemäße Verfahren geht davon aus, daß nur zwei Teilnehmer sich die Resourcen zeitgleich in einer Allokationsperiode teilen. Dadurch wird vermieden, daß Resourcen bei kleinen Datenmengen für eine Teilnehmerstation ungenutzt bleiben. Dieses tritt insbesondere am Ende von Paketübertragungen auf, wenn noch Restmengen zu übertragen sind, andererseits aber Daten für einen anderen Teilnehmer auf eine nachfolgende Übertragung warten. Auf eine parallele Verteilung auf mehrere Teilnehmer wird verzichtet, da diese nach wie vor entsprechend einem Zeitmultiplexverfahren abgearbeitet werden können.

Den beiden Teilnehmerstationen wird nun die jeweilige Datenrate bzw. die Anzahl der zu nutzenden Kanäle signalisiert. Die Summe der genutzten Resourcen darf dabei die Anzahl der in dem gemeinsamen Kanal zur Verfügung stehenden Resourcen nicht übersteigen. Die eine Teilnehmerstation wertet nun beispielsweise alle Resourcen von 0 bis zu seiner ermittelten Anzahl der Resourcen aus. Die andere Teilnehmerstation wertet alle Resourcen von der höchsten vorhandenen Resource abwärts zu der signalisierten oder aus der Datenrate ermittelten Anzahl Resourcen aus.

Ein nicht dargestelltes Beispiel soll dieses nochmals verdeutlichen: Die Gesamtdatenrate beträgt beispielsweise 100kB und es stehen die Resourcen 0-19 zur Verfügung. Die erste Teilnehmerstation ermittelt eine Datenrate von 20KB, welches 4 Resourcen entspricht, und die zweite Teilnehmerstation ermittelt eine Datenrate von 80 KB, welches 16 Resourcen entspricht. Die erste Teilnehmerstation liest nun die Resourcen 0 bis 3 und die zweite Teilnehmerstation die Resourcen 19 bis 4.

Welche Teilnehmerstation von oben und welche Teilnehmerstation von oben anfängt zu lesen, kann entweder von vornherein für jede Teilnehmerstation festgelegt oder über eine 1Bit Information der jeweiligen Teilnehmerstation aktuell signalisiert werden. Bei der nächsten Zuweisungn können wiederum zwei andere oder auch nur eine andere Teilnehmerstation angesprochen werden. Hierbei ist nicht erforderlich, daß die Resourcen einen zusammenhängenden Block bilden.

Das erfindungsgemäße Verfahren ist sowohl für den FDD- als auch für den TDD-Modus des UMTS-Mobilfunksystems geeignet.

Anhand eines UMTS TDD 1,28Mcps Mobilfunksystems wird das erfindungsgemäße Verfahren in der Fig 5 schrittweise beschrieben.
1. Im Vorfeld werden alle Teilnehmerstationen MS informiert, daß alle Resourcen in den Zeitschlitzen TS5 bis TS7 eines Zeitrahmens Frame als gemeinsam genutzter Kanal zur Verfügung stehen. Die Resourcen bilden einen sogenannten Shared Channel mit einer beispielhaften Datenrate von 30kB.
2. In dem Zeitrahmen Frame 2 sollen Daten für die Teilnehmerstationen MS1 und MS2 übertragen werden, daher wird einen Zeitrahmen Frame 1 vor der Übertragung beiden Teilnehmerstationen MS1, MS2 das jeweilige TFCI übermittelt. Die Übermittlung kann dabei mittels eines sogenannten Common Control-(allgemeiner Steuerkanal) oder eines Dedicated Channels (Dezidierter Kanal) erfolgen. Eine Signalisierung unter Angabe des Zeitpunkts der Gültigkeit der Signalisierung ist ebenfalls denkbar.
3. Die Teilnehmerstation MS1 ermittelt aus der Signalisierung eine Datenrate von 10kB für den Zeitrahmen Frame 2, und daß sie von der niedrigsten Resourcenummer aufwärts beginnen soll zu empfangen. Eine Datenrate von 10kB entspricht beispielsweise einem Zeitschlitz TS. Die Teilnehmerstation MS1 liest nur TS5 in Zeitrahmen Frame 2.
4. Die Teilnehmerstation MS2 ermittelt aus der Signalisierung eine Datenrate von 20kB für den Zeitrahmen Frame 2, und daß sie von der höchsten Resourcenummer abwärts beginnen soll, Aussendungen der Basisstation in Abwärtsrichtung auf diesen Kanälen zu empfangen. Die Teilnehmerstation MS2 liest die Zeitschlitze TS7 und TS6 in dem Zeitrahmenn Frame 2.

Die Konfiguration in dem nachfolgenden Zeitrahmen Frame 3 kann abhängig von der Signalisierung wie in gestrichelten Linien dargestellt der des Zeitrahmens Frame 2 entsprechen oder aber auch abhängig von einem akutellen Bedarf geändert werden.

Die Erfindung kann auch für eine größere Anzahl Teilnehmerstationen genutzt werden. Durch eine geeignete Segmentierung der verfügbaren Kanäle und der Signalisierung des Beginns und der Richtung kann eine vorteilhaft resourcensparende Zuweisung erfolgen. So kann die Reihenfolge Kanäle in einem gemeinsamen Kanal beispielsweise in vier Startpunkte unterteilt werden, wobei die Richtung identisch ist. Durch eine Signalisierung des Startpunktes mittels zwei Bits in der TFCI-Signalisierungsnachricht können so vier Kanalsegmente individuell zugewiesen werden.

Bei einer Realisierung des erfindungsgemäßen Verfahren in einem einen FDD-Modus nutzenden Mobilfunksystem werden anstelle von Zeitschlitzen bzw. Kombinationen von Zeitschlitzen und CDMA-Kodes (TDD-Modus) durch einen jeweiligen CDMA-Kode definierte Kanäle zugewiesen. Ein gemeinsamer Kanal besteht dabei aus einer Anzahl von Kanälen, die in einer den Teilnehmerstationen bekannte Reihenfolge definiert werden.

## Patentansprüche

1. Verfahren zur Zuweisung von Kanälen in einem Funk-Kommunikationsystem, wobei eine Datenübertragung zwischen einer Basisstation (BS) und Teilnehmerstationen (MS) über eine Funkschnittstelle erfolgt, bei dem:
- ein von mehreren Teilnehmerstationen (MS) gemeinsam nutzbarer Kanal (DSCH) aus zumindest zwei Kanälen besteht, die mehreren, parallel existierenden Verbindungen (V1, V2) zur zeitlich aufeinanderfolgenden Nutzung zuteilbar sind, wobei die Kanäle gemäß einer den Teilnehmerstationen (MS) bekannten Reihenfolge strukturiert sind;
- einer Teilnehmerstation (MS1) mittels einer teilnehmerindividuellen Signalisierungsnachricht (TFCI) eine Anzahl Kanäle oder eine Datenrate zugewiesen wird;
- der Teilnehmerstation (MS) zusätzlich ein Startpunkt in der Reihenfolge zur Auswahl der Kanäle signalisiert wird; und das **dadurch gekennzeichnet ist, dass**
- eine Beziehung zwischen Datenrate und der Anzahl zu benutzender Kanäle in dem gemeinsam nutzbarem Kanal (DSCH) beim Verbindungsaufbau einer der mehreren Verbindungen vereinbart wird.

2. Verfahren nach Anspruch 1, bei dem innerhalb einer Verbindung (V1) zwischen der Basisstation (BS) und der Teilnehmerstation (MS) eine Kombination von Daten mehrerer Dienste (S) innerhalb eines oder mehrerer Kanäle (DCH, DSCH) übertragen wird, wobei die aktuelle Kombination, die Datenrate (GR) und Zuteilung von gemeinsamen Kanälen (DSCH) anhand von Werten in der Signalisierungsnachricht (TFCI) signalisiert werden.

3. Verfahren nach Anspruch 1 oder 2, bei dem die Datenübertragung in Abwärtsrichtung von der Basisstation (BS) zu den Teilnehmerstationen (MS) erfolgt.

4. Verfahren nach einem der vorherigen Ansprüche, bei dem mittels einer jeweiligen Teilinformation in der Signalisierungsnachricht (TFCI) die einzelnen Datenraten der Dienste (S) innerhalb einer Verbindung und die Benutzung von einem oder mehreren Kanälen in dem gemeinsamen Kanal (DSCH) In-Band signalisiert wird.

5. Verfahren nach einem der vorhergehenden Ansprüche, bei dem die Signalisierungsnachricht (TFCI) und/oder der Startpunkt in einem dedizierten Kanal übertragen werden.

6. Verfahren nach einem der Ansprüche 1 bis 4, bei dem der Startpunkt in einem Steuerkanal übertragen werden.

7. Verfahren nach einem der Ansprüche 1 bis 4, bei dem der Startpunkt jeweils bei einem Verbindungsaufbau der Teilnehmerstation (MS) signalisiert wird.

8. Basistationssystem eines Funk-Kommunikationsystems zur Zuweisung von Kanälen, wobei eine Datenübertragung zwischen einer Basisstation (BS) und Teilnehmerstationen (MS) über eine Funkschnittstelle erfolgt, mit:
- Übertragungsmitteln zum Aussenden eines von mehreren Teilnehmerstationen (MS) gemeinsam nutzbaren Kanals (DSCH), der aus zumindest zwei Kanälen für mehrere, parallel existierende Verbindungen (V1, V2) zur zeitlich aufeinanderfolgenden Nutzung besteht, wobei die Kanäle gemäß einer den Teilnehmerstationen (MS) bekannten Reihenfolge strukturiert sind; und
- Signalisierungsmitteln zum Aussenden einer teilnehmerindividuellen Signalisierungsnachricht (TFCI) zu einer Teilnehmerstation (MS) zum Zuweisen einer Anzahl Kanäle oder einer Datenrate, und zum Signalisieren eines Startpunktes in der Reihenfolge zur Auswahl der Kanäle durch die Teilnehmerstation (MS), durch Mittel gekennzeichnet, so dass eine Beziehung zwischen Datenrate und der Anzahl zu benutzender Kanäle in dem gemeinsam nutzbarem Kanal (DSCH) beim Verbindungsaufbau einer der mehreren Verbindungen vereinbart wird.

9. Teilnehmerstation eines Funk-Kommunikationsystems zur Zuweisung von Kanälen, wobei eine Datenübertragung zwischen einer Basisstation (BS) und der Teilnehmerstation (MS) über eine Funkschnittstelle erfolgt, mit Empfangsmitteln
- zum Empfangen eines von einer Basisstation (BS) ausgesendeten mit weiteren Teilnehmerstationen (MS) gemeinsam nutzbaren Kanals (DSCH), der aus zumindest zwei Kanälen für mehrere, parallel existierende Verbindungen (V1, V2) zur zeitlich aufeinanderfolgenden Nutzung besteht, wobei die Kanäle gemäß einer der Teilnehmerstation (MS) bekannten Reihenfolge strukturiert sind; und
- zum Empfangen einer teilnehmerindividuellen Signalisierungsnachricht (TFCI) zum Zuweisen einer Anzahl Kanäle oder einer Datenrate und eines signalisierten Startpunktes in der Reihenfolge zur Auswahl der Kanäle, durch Mittel gekennzeichnet, so dass eine Beziehung zwischen Datenrate und der Anzahl zu benutzender Kanäle in dem gemeinsam nutzbarem Kanal (DSCH) beim Verbindungsaufbau einer der mehreren Verbindungen vereinbart wird.

10. Funk-Kommunikationssystem zur Durchführung des Verfahrens gemäss Patentanspruch 1.

## Claims

1. Method for allocating channels in a radio communication system, wherein a data transmission between a base station (BS) and subscriber stations (MS) is effected via a radio interface, in which:
- a channel (DSCH) jointly useable by multiple subscriber stations (MS) consists of at least two channels that are assignable to multiple connections (V1, V2) existing in parallel for use at successive times, wherein the channels are structured according to an order that is known to the subscriber stations (MS);
- a subscriber station (MS1) is allocated a number of channels or a data rate by means of a subscriber-individual signalling message (TFCI);
- the subscriber station (MS) additionally has a starting point in the order for selection of the channels signalled to it; and
that is **characterized in that**
- a relationship between data rate and the number of channels to be used in the jointly useable channel (DSCH) is agreed during the connection set-up of one of the multiple connections.

2. Method according to Claim 1, in which within a connection (V1) between the base station (BS) and the subscriber station (MS) a combination of data of multiple services (S) is transmitted within one or more channels (DCH, DSCH), wherein the current combination, the data rate (GR) and assignment of shared channels (DSCH) are signalled on the basis of values in the signalling message (TFCI).

3. Method according to Claim 1 or 2, in which the data transmission is effected in the downlink from the base station (BS) to the subscriber stations (MS).

4. Method according to one of the preceding claims, in which a respective piece of subinformation in the signalling message (TFCI) is used to signal the individual data rates of the services (S) within a connection and the use of one or more channels in the shared channel (DSCH) in-band.

5. Method according to one of the preceding claims, in which the signalling message (TFCI) and/or the starting point are transmitted in a dedicated channel.

6. Method according to one of Claims 1 to 4, in which the starting point is transmitted in a control channel.

7. Method according to one of Claims 1 to 4, in which the starting point is signalled during a connection set-up of the subscriber station (MS) each time.

8. Base station system of a radio communication system for allocating channels, wherein a data transmission between a base station (BS) and subscriber stations (MS) is effected via a radio interface, having:
- transmission means for transmitting a channel (DSCH) that is jointly useable by multiple subscriber stations (MS) and consists of at least two channels for multiple connections (V1, V2) existing in parallel for use at successive times, wherein the channels are structured according to an order that is known to the subscriber stations (MS); and
- signalling means for transmitting a subscriber-individual signalling message (TFCI) to a subscriber station (MS) for allocating a number of channels or a data rate, and for signalling a starting point in the order for selection of the channels by the subscriber station (MS), **characterized by** means, so that a relationship between data rate and the number of channels to be used in the jointly useable channel (DSCH) is agreed during the connection set-up of one of the multiple connections.

9. Subscriber station of a radio communication system for allocating channels, wherein a data transmission between a base station (BS) and the subscriber station (MS) is effected via a radio interface, having reception means
- for receiving a channel (DSCH) that is transmitted by a base station (BS), jointly useable with further subscriber stations (MS) and consists of at least two channels for multiple connections (V1, V2) existing in parallel for use at successive times, wherein the channels are structured according to an order that is known to the subscriber station (MS); and
- for receiving a subscriber-individual signalling message (TFCI) for allocating a number of channels or a data rate and a signalled starting point in the order for selection of the channels, **characterized by** means, so that a relationship between data rate and the number of channels to be used in the jointly useable channel (DSCH) is agreed during the connection set-up of one of the multiple connections.

10. Radio communication system for performing the method according to Patent Claim 1.

## Revendications

1. Procédé d'affectation de canaux dans un système de radiocommunication dans lequel une transmission de données est effectuée entre une station de base (BS) et des stations d'abonné (MS) par l'intermédiaire d'une interface radio, selon lequel :
- un canal (DSCH) utilisable en commun par plusieurs postes d'abonné (MS) est composé d'au moins deux canaux qui peuvent être affectés à plusieurs communications (V1, V2) existantes en parallèle en vue d'une utilisation successive dans le temps, les canaux étant structurés selon un ordre connu des stations d'abonné (MS),
- un nombre de canaux ou un débit de données est affecté à une station d'abonné (MS1) au moyen d'un message de signalisation (TFCI) individuel,
- un point de départ dans l'ordre de sélection des canaux est signalé en outre à la station d'abonné (MS), et **caractérisé en ce que**
- une relation entre un débit de données et le nombre de canaux à utiliser dans le canal utilisable en commun (DSCH) est fixée lors de l'établissement de la communication d'une des plusieurs communications.

2. Procédé selon la revendication 1, dans lequel, dans une communication (V1) entre la station de base (BS) et la station d'abonné (MS), une combinaison de données de plusieurs services (S) est transmise dans un ou plusieurs canaux (DCH, DSCH), la combinaison instantanée, le débit de données (GR) et l'affectation des canaux communs (DSCH) étant signalés sur la base des valeurs indiquées dans le message de signalisation (TFCI).

3. Procédé selon la revendication 1 ou 2, dans lequel la transmission de données s'effectue dans une direction descendante de la station de base (BS) vers les stations d'abonné (MS).

4. Procédé selon l'une quelconque des revendications précédentes, dans lequel les différents débits de données des services (S) dans une communication et l'utilisation d'un ou plusieurs canaux dans le canal commun (DSCH) sont signalés dans la bande au moyen d'une information partielle respective dans le message de signalisation (TFCI).

5. Procédé selon l'une quelconque des revendications précédentes, dans lequel le message de signalisation (TFCI) et/ou le point de départ sont transmis dans un canal dédié.

6. Procédé selon l'une quelconque des revendications 1 à 4, dans lequel le point de départ est transmis dans un canal de commande.

7. Procédé selon l'une quelconque des revendications 1 à 4, dans lequel le point de départ est signalé à chaque fois lors de l'établissement d'une communication à la station d'abonné (MS).

8. Système de station de base d'un système de radiocommunication permettant d'affecter des canaux dans lequel une transmission de données est effectuée entre une station de base (BS) et des stations d'abonné (MS) par l'intermédiaire d'une interface radio, comprenant :
- des moyens de transmission pour émettre un canal (DSCH) utilisable en commun par plusieurs postes d'abonné (MS), qui est composé d'au moins deux canaux pour plusieurs communications (V1, V2) existantes en parallèle en vue d'une utilisation successive dans le temps, les canaux étant structurés selon un ordre connu des stations d'abonné (MS), et
- des moyens de signalisation pour émettre un message de signalisation (TFCI) individuel à une station d'abonné (MS) indiquant l'affectation d'un nombre de canaux ou d'un débit de données, et pour signaler un point de départ dans l'ordre de sélection des canaux par la station d'abonné (MS), **caractérisé en ce qu'**il comprend des moyens conçus de façon à
- fixer une relation entre un débit de données et le nombre de canaux à utiliser dans le canal utilisable en commun (DSCH) lors de l'établissement de la communication d'une des plusieurs communications.

9. Station d'abonné d'un système de radiocommunication permettant d'affecter des canaux dans lequel une transmission de données est effectuée entre une station de base (BS) et la station d'abonné (MS) par l'intermédiaire d'une interface radio, comprenant des moyens de réception permettant de
- recevoir un canal (DCSH) utilisable en commun avec d'autres stations d'abonné (MS) émis par une station de base (BS), qui est composé d'au moins deux canaux pour plusieurs communications (V1, V2) existantes en parallèle, en vue d'une utilisation successive dans le temps, les canaux étant structurés selon un ordre connu de la station d'abonné (MS), et
- recevoir un message de signalisation (TFCI) individuel d'abonné pour affecter un nombre de canaux ou un débit de données et un point de départ signalé dans l'ordre de sélection des canaux, et
**caractérisé en ce qu'**elle comprend des moyens conçus de façon à
- fixer une relation entre un débit de données et le nombre de canaux à utiliser dans le canal utilisable en commun (DSCH) lors de l'établissement de la communication d'une des plusieurs communications.

10. Système de radiocommunication permettant d'exécuter le procédé selon la revendication 1.
